Europäisches Patentamt

European Patent Office

Office européen des brevets

(11) Veröffentlichungsnummer: **0 320 837**
**A2**

## (12) EUROPÄISCHE PATENTANMELDUNG

(21) Anmeldenummer: 88120696.5

(22) Anmeldetag: **10.12.88**

(51) Int. Cl.⁴: **B29C 35/12 , B29C 67/14 , B29D 31/00 , F16F 1/36**

(30) Priorität: 17.12.87 DE 3742835

(43) Veröffentlichungstag der Anmeldung:
**21.06.89 Patentblatt 89/25**

(84) Benannte Vertragsstaaten:
**AT DE ES FR GB IT SE**

(71) Anmelder: **BASF Aktiengesellschaft
Carl-Bosch-Strasse 38
D-6700 Ludwigshafen(DE)**

(72) Erfinder: **Kasper, Dietmar
Kurzweil 8
D-6700 Ludwigshafen(DE)**
Erfinder: **Kreibiehl, Guenter
Sperlinggasse 8
D-6700 Ludwigshafen(DE)**

(54) **Verfahren zur diskontinuierlichen Herstellung von Formkörpern aus mit Fasermaterial verstärkten Kunststoffen.**

(57) Zur Herstellung von Formkörpern aus faserverstärkten Kunststoffen wird Fasermaterial in Form von Fasersträngen, -bündeln, -geweben oder -gelegen mit dem unter Wärmeeinwirkung härtbaren Kunststoff imprägniert, in ein bandförmiges Laminat übergeführt und gegebenenfalls zu Streifen abgelängt. Mehrere dieser Laminatstreifen werden unter Ausbildung des Formkörpers in einem Preßwerkzeug verpreßt und durch entsprechende Wärmeeinwirkung gehärtet. Zwecks Reduzierung der Härtezeit sowie für eine verbesserte Qualität der Formkörper werden die Laminatstreifen vor ihrem Einbringen in das Preßwerkzeug in einem Hochfrequenz-Feld auf eine Temperatur von etwa 0 bis etwa 100°C unterhalb der Anspringtemperatur des Kunststoffes erwärmt.

FIG.1

## Verfahren zur diskontinuierlichen Herstellung von Formkörpern aus mit Fasermaterial verstärkten Kunststoffen

Die Erfindung betrifft ein Verfahren zur diskontinuierlichen Herstellung von Formkörpern, insbesondere Blattfedern, aus mit Fasermaterial verstärkten, flüssigen und unter Wärmeeinwirkung härtbaren Kunststoffen, bei dem Fasermaterial in Form von Fasersträngen, -bündeln, -geweben oder -gelegen mit dem Kunststoff imprägniert, in ein bandförmiges Laminat übergeführt und gegebenenfalls zu Streifen abgelängt wird und mehrere Laminatstreifen unter Ausbildung des Formkörpers in einem Preßwerkzeug durch entsprechende Wärmeeinwirkung gehärtet werden.

Ein derartiges Verfahren ist aus der EP-PS 0 106 249 bekannt. Dabei werden mehrere bereits ausgehärtete Laminatstreifen nach Beschichtung mit einem duromeren Bindemittel oder unter Einfügung von ein faseriges Trägermaterial und ein duromeres Bindemittel enthaltenden Klebeblättern in einer Preßform miteinander verbunden. Dies geschieht durch Aktivieren und Härten des Bindemittels bei erhöhten Temperaturen, gegebenenfalls in einem elektromagnetischen Hochfrequenzfeld. Das Hochfrequenzfeld wird durch die elektrisch leitende Beläge aufweisenden und mit einem HF-Generator verbundenen Formhälften der Preßform gebildet.

Dadurch, daß die Erwärmung und Verklebung der Laminatstreifen ausschließlich in der Preßform erfolgt, ergeben sich jedoch verhältnismäßig lange Härtungszeiten. Außerdem entsteht ein Temperaturgefälle von der Oberfläche der Laminatstreifen zur Laminatstreifenmitte hin. Folge davon ist, daß bei Formkörpern mit unterschiedlichen Querschnitten, wie Parabelblattfedern, die Vernetzung des duromeren Bindemittels bzw. Kunststoffes im Bereich kleiner Querschnitte, beispielsweise im Bereich der Federenden schon abgeschlossen ist, bevor sie im Bereich großer Querschnitte, d.h. in der Federmitte startet. In den Federenden finden dann keine Fließprozesse mehr statt, obwohl aus dem Mittenbereich durch das noch nicht abgeschlossene Komprimieren der Laminatstreifen weiter Bindemittel bzw. Kunststoff ausgepreßt wird. Es bilden sich Stau- und Schiebefalten in der Feder. Fließprozesse im Mittenbereich der Feder bleiben auf die Randzonen beschränkt, im Innern der Laminatstreifen treten sie kaum auf, so daß zwischen den Laminatstreifen eingeschlossene Luft nur schwer entfernt werden kann und häufig zu Fehlstellen im Formkörper führt.

Mit der Erfindung soll ein Verfahren geschaffen werden, welches die vorstehend geschilderten Nachteile vermeidet und eine besonders wirtschaftliche Herstellung von aus Laminatstreifen aufgebauten Formkörpern guter Qualität gewährleistet.

Diese Aufgabe wird dadurch gelöst, daß die Laminatstreifen vor ihrem Einbringen in das Preßwerkzeug in einem Hochfrequenz-Feld auf eine Temperatur von etwa 0 bis etwa 100°C unterhalb der Anspringtemperatur des Kunststoffes erwärmt werden.

Durch das Vorwärmen der nicht ausgehärteten Laminatstreifen lassen sich diese mit wesentlich niedrigerem Druck zu Formkörpern verpressen. Darüber hinaus kann die Härtezeit erheblich reduziert und die Qualität der Formkörper verbessert werden.

Im einzelnen wird gemäß der Erfindung Fasermaterial in Form von Fasersträngen, -bündeln, -geweben oder -gelegen mit einem unter Wärmeeinwirkung härtbaren Kunststoff imprägniert, d.h. es werden sogenannte Prepregs hergestellt. Als Fasermaterial kommen hierfür Stränge, Bündel, Gewebe, Gelege u. dgl. aus Glas, Keramik, Kohlenstoff und/oder Kunststoff in Betracht. Geeignete Kunststoffe für das Imprägnieren sind beispielsweise solche, die durch freie Radikale vernetzt werden können, wie z.B. ungesättigte Polyesterharze, ungesättigte und gesättigte Acrylharze, modifizierte Epoxyharze, modifizierte Polyurethanharze oder Mischungen dieser Harze. Außerdem können auch Gemische mit mischpolymerisierbaren ungesättigten Monomeren verwendet werden.

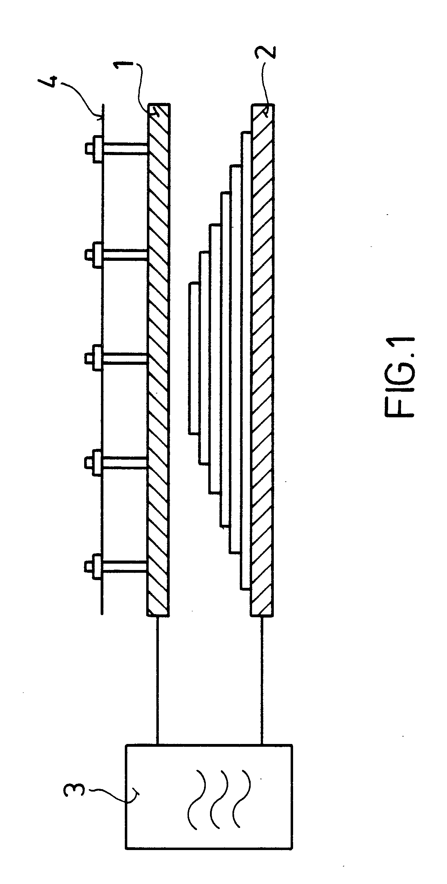

Das Imprägnieren des Fasermaterials erfolgt in an sich bekannter Weise in einem kontinuierlichen Verfahren, bei dem das Fasermaterial durch ein Reservoir oder Bad eines flüssigen Kunststoffes und anschließend durch eine Kalibriervorrichtung geleitet und in ein bandförmiges Laminat einer Dicke von ca. 0,1 bis 10 mm übergeführt wird. Die in den benötigten Längen zugeschnittenen Laminatstreifen werden dann einzeln oder übereinandergeschichtet in einem Hochfrequenz-Feld erwärmt. Während des Vorwärmens kann gegebenenfalls auch eine Verformung der Laminatstreifen erfolgen. Insgesamt hat sich eine Erwärmung der Laminatstreifen auf eine Temperatur von etwa 0 bis etwa 100°C, vorzugsweise von 10 bis 30°C, unterhalb der Anspringtemperatur des Kunststoffes am zweckmäßigsten erwiesen. Hierzu wird gemäß Figur 1 zwischen zwei HF-Kondensatorfeldelektroden (1) und (2), die mit einem HF-Generator (3) verbunden sind, ein elektrisches Feld z.B. der Frequenz von 27,54 MHz entsprechend einer Wellenlänge von 12 m erzeugt. Von den HF-Kondensatorfeldelektroden ist wenigstens eine mit einem Verstellmechanismus (4) versehen. Die vorgewärmten, nicht ausgehärteten Laminatstreifen werden unmittelbar anschließend in einem beheizten Preßwerkzeug bei Temperaturen zwischen 40 und 200°C unter Ausbildung des Formkörpers und Aushärten des Kunststoffes verpreßt.

Nach einem weiteren Merkmal der Erfindung werden die aufeinandergeschichteten Laminatstreifen entsprechend ihrem Querschnittsverlauf unterschiedlich erwärmt, wobei in Bereiche großer Querschnittsflächen durch kleine Elektrodenabstände zu den Laminatstreifen höhere elektrische Feldenergie übertragen wird und umgekehrt. Den Laminatstreifen wird entsprechend ihrer Geometrie ein Temperaturprofil zugeordnet.

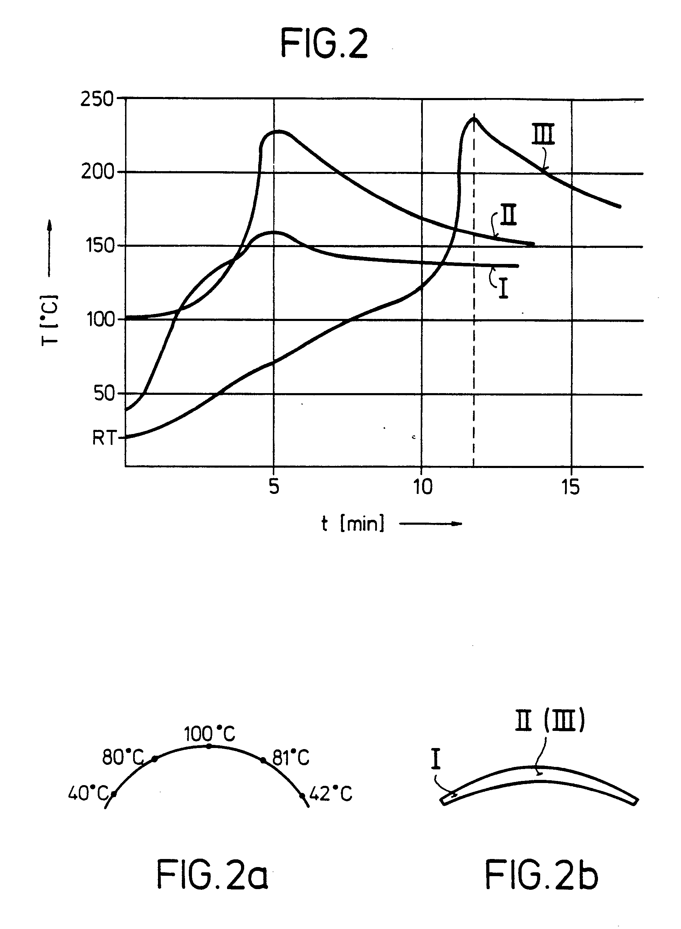

Die Aufheizzeiten und Temperaturprofile richten sich dabei nach der Anzahl der polaren Gruppen im zu erwärmenden Kunststoff, nach der Geometrie des Formkörpers und dem Härtungsverhalten, respektive dem Viskosität-Temperaturverhalten des Kunststoffes. Das Temperaturprofil, welches z.B. bei einer Parabelblattfeder in den unterschiedlichen Querschnittsflächen eine simultane Härtung ermöglicht, ist beispielhaft in Figur 2 gezeigt. Die Vorwärmtemperaturen sind gemäß Figur 2a dem Laminatquerschnitt angepaßt. Bei EP-Harzen wird vorzugsweise im größen Querschnitt von Raumtemperatur bis kurz unterhalb der Anspringtemperatur des Kunststoffes vorgewärmt.

Die Kurve I in Figur 2 gibt den Reaktionstemperaturverlauf in dem kleinen Querschnitt am Blattfederende wieder (Figur 2b). Dieser zeigt sowohl mit als auch ohne HF-Vorwärmung einen ähnlichen Verlauf. Der gravierende Vorteil macht sich im Bereich großer Querschnitte bemerkbar. Die Kurven II und III zeigen den Reaktionstemperaturverlauf über der Zeit aufgetragen, wobei die Kurve III den Reaktionstemperaturverlauf ohne HF-Vorwärmung widergibt. Es wird deutlich, daß die Vorwärmtemperatur von 100°C im Bauteilquerschnitt die Zykluszeit dieses Systems erheblich verringert. Weiterhin ist aus den Kurvenverläufen II und III erkennbar, daß durch eine dem Querschnitt der Laminatstreifen angepaßte Vorwärmtemperatur, der Reaktionspeak und damit das Ende der Härtungsphase zwischen Raumtemperatur und der Anspringtemperatur des Kunststoffes einstellbar ist.

Die HF-Vorwärmung ermöglicht besonders bei Formkörpern mit kontinuierlich ab- oder zunehmenden Querschnitten für den nachfolgenden Preßvorgang ein dem Fließverhalten des Kunststoffes entsprechendes Vorwärmtemperaturprofil einzustellen. Das bedeutet, daß z.B. bei einer Parabelblattfeder, die Härtungsreaktion in der Federmitte zeitlich vor dem Federende abläuft und damit die zwischen den Laminatsstreifen vorhandene Luft mit dem überschüssigen Harz in Richtung des abnehmenden Querschnittes zu den Federenden hin aus der Blattfeder gefördert werden kann.

Der Vorwärmtemperaturbereich bei der Verwendung von unter Wärmeeinwirkung härtbaren Kunststoffen erstreckt sich von Raum- bis zur Anspringtemperatur des Kunststoffes. Von Vorteil ist weiterhin, daß die vorgewärmten Laminatstreifen keinen Viskositätsunterschied zwischen den Randbereichen und den inneren Zonen aufweisen, so daß während der Ausbildung eines Formkörpers, d.h. während des Preßvorgangs Fließprozesse über den gesamten Formkörperquerschnitt verteilt sind. Es lassen sich dadurch besonders homogene und fehlstellenfreie Formkörper herstellen.

## Ansprüche

1. Verfahren zur diskontinuierlichen Herstellung von Formkörpern, insbesondere Blattfedern, aus mit Fasermaterial verstärkten, flüssigen und unter Wärmeeinwirkung härtbaren Kunststoffen, bei dem Fasermaterial in Form von Fasersträngen, -bündeln, -geweben oder -gelegen mit dem Kunststoff imprägniert, in ein bandförmiges Laminat übergeführt und gegebenenfalls zu Streifen abgelängt wird und mehrere Laminatstreifen unter Ausbildung des Formkörpers in einem Preßwerkzeug durch entsprechende Wärmeeinwirkung gehärtet werden, dadurch gekennzeichnet, daß die Laminatstreifen vor ihrem Einbringen in das Preßwerkzeug in einem Hochfrequenz-Feld auf eine Temperatur von etwa 0 bis etwa 100°C unterhalb der Anspringtemperatur des Kunststoffes erwärmt werden.

2. Verfahren nach Anspruch 1, dadurch gekennzeichnet, daß die aufeinandergeschichteten Laminatstreifen entsprechend ihrem Querschnittsverlauf unterschiedlich erwärmt werden, wobei in Bereiche großer Querschnittsflächen durch kleine Elektrodenabstände zu den Laminatstreifen höhere elektrische Feldenergie übertragen wird und umgekehrt.

FIG.1

377/87

# FIG.2

# FIG.2a

# FIG.2b

377/87